# EUROPEAN PATENT APPLICATION

(11) **EP 2 624 030 A2**
(43) Date of publication of application: **07.08.2013**
(21) Application number: 13152500.8
(22) Date of filing: 24.01.2013
(51) Int. Cl.: G02B 6/255

(54) **Detachable optical fiber guides for splice connector installation tools, and related assemblies and methods**

(30) Priority: 31.01.2012 US 201213362474
(71) Applicant: Corning Cable Systems LLC, Hickory NC 28602 (US)
(72) Inventor: Barnes, Brandon Andrew, Forth Worth, TX Texas 76137 (US); Herridge, Joseph Ronald, Forth Worth, TX Texas 76117 (US); Thornton, Jr., Michael Gene, Forth Worth, TX Texas 76244 (US)
(74) Representative: Sturm, Christoph

(57) **Abstract**

Detachable optical fiber guides for splice connector installation tools, and related assemblies and methods are disclosed. The detachable optical fiber guides may be employed to help guide an optical fiber into a fiber optic connector attached within a splice connector installation tool. The detachable optical fiber guides may also be employed to better view the optical fiber, and also to reduce debris and damage to the optical fiber while being inserted into the fiber optic connector. The detachable optical fiber guides may include features to allow the detachable optical fiber guide to be installed toollessly upon the splice connector installation tool for convenient installation, and subsequent removal.

## Description

### RELATED APPLICATION

This application claims the benefit of priority under 35 U.S.C. §120 of U.S. Application Serial No. 13/362,474 filed on Jan. 31, 2012 the content of which is relied upon and incorporated herein by reference in its entirety.

### BACKGROUND

### Field of the Disclosure

The technology of the disclosure relates to terminating fiber optic mechanical splice connectors to an optical fiber, and more particularly, to a splice connector installation tool and fiber optic mechanical splice connectors containing stub optical fibers.

### Technical Background

Optical fibers are useful in a wide variety of applications, including the telecommunications industry in which optical fibers are employed for voice, data and video transmission. With the ever increasing and varied use of optical fibers, apparatus and methods have been developed for coupling optical fibers to one another outside the controlled environment of a factory setting, commonly referred to as "field installation" or "in the field," such as in a telephone central office, in an office building, and in various types of outside plant terminals. However, in order to efficiently couple the optical signals transmitted by the fibers, a fiber optic connector must not significantly attenuate, reflect or otherwise alter the optical signals. In addition, fiber optic connectors for coupling optical fibers must be relatively rugged and adapted to be connected and disconnected a number of times in order to accommodate changes such as moves, adds, and changes in the optical transmission path that may occur over time.

Although fiber optic connectors are most efficiently and reliably mounted upon the end portion of an optical fiber in a factory setting, it is often desirable to install fiber optic connectors in the field. In other words, the the end user can install the fiber optic connector on the end portion of an optical fiber in the field. Installing fiber optic connectors in the field can advantageously minimize cable lengths and optimize cable management and routing. In this regard, installation tools have been developed to facilitate the splice termination of one or more optical fibers to a fiber optic connector, and particularly, to enable the splice termination of one or more field optical fibers to a mechanical splice connector. Examples of conventional installation tools for performing mechanical splices in the field are described in U.S. Patent Nos. 5,040,867; 5,261,020; 6,816,661; and 6,931,193. In particular, U.S. Patent Nos. 6,816,661 and 6,931,193 describe a UNICAM® installation tool available from Corning Cable Systems LLC of Hickory, N.C., designed specifically to facilitate mounting the UNICAM® family of fiber optic connectors upon the end portions of one or more field optical fibers.

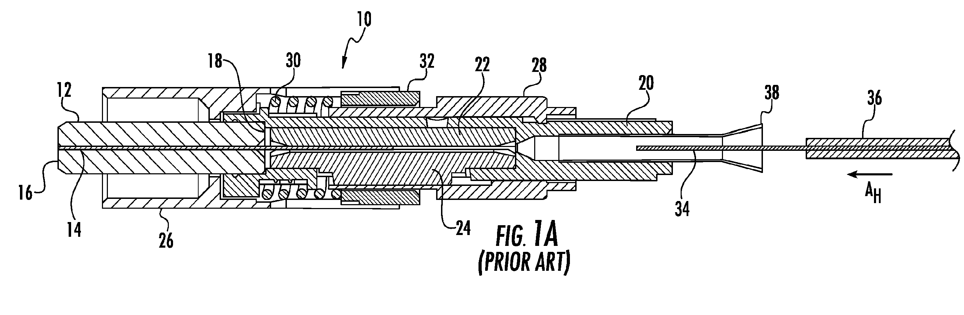

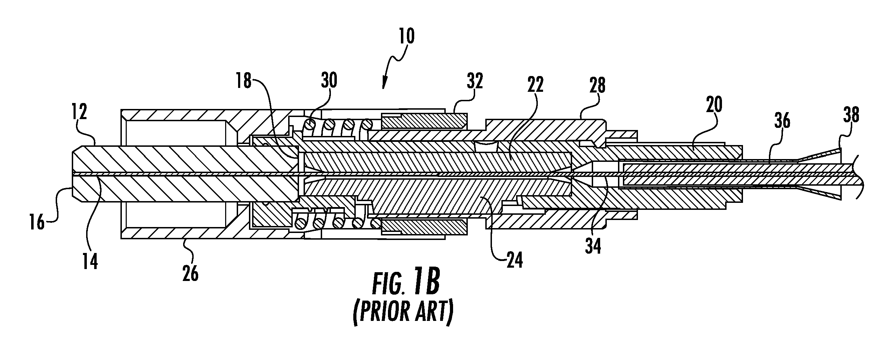

**FIGS. 1A** and **1B** respectively illustrate an exemplary field-installable, mechanical splice fiber optic connector **10** (also referred to as "mechanical splice connector" and "fiber optic connector **10")** suitable for use with the installation tool before and after termination. The fiber optic connector **10** may be a member of the UNICAM® family of mechanical splice connectors. As shown in **FIGS. 1A** and **1B****,** the mechanical splice connector **10** includes a connector ferrule **12** defining a lengthwise, longitudinal bore for receiving and securing a stub optical fiber **14** in a known manner, such as by an adhesive. The forward end **16** (also referred to herein as the end face) of the ferrule **12** is typically precision polished such that the stub optical fiber **14** is flush with (as shown) or slightly protruding from the end face **16** of the ferrule **12.** The rear end **18** of the ferrule **12** is inserted into and secured within the forward end of a ferrule holder **20** so that the stub optical fiber **14** extends rearwardly a predetermined distance from the ferrule **12** between a pair of opposed splice components **22, 24** disposed within the ferrule holder **20.** In turn, the ferrule holder **20,** including the ferrule **12** and splice components **22, 24,** are disposed within a connector housing **26.**

With continuing reference to **FIGS. 1A** and **1B****,** a cam member **28** is movably mounted to the ferrule holder **20** and the connector housing **26** for engaging a keel portion of the lower splice component **24.** If desired, the ferrule **12,** the ferrule holder **20** and the cam member **28** may be biased relative to the connector housing **26,** for example by a coil spring **30,** to ensure physical contact between the end face **16** of the ferrule **12** and the end face of an opposing ferrule in a mating fiber optic connector or optical device (not shown). Finally, a spring retainer **32** may be disposed between the connector housing **26** and a medial portion of the cam member **28** and fixed to the connector housing **26** so as to retain one end of the spring **30** relative to the connector housing **26.** As a result, the ferrule **12,** the ferrule holder **20** and the cam member **28** are biased forwardly, yet permitted to piston rearwardly relative to the connector housing **26.**

To make a splice within a connector, a field optical fiber **34** is inserted into a rear end of the ferrule holder **20** opposite the ferrule **12** and the stub optical fiber **14** as illustrated by the horizontal directional arrow **A_{H}** in **FIG. 1A****.** Typically, the field optical fiber **34** is coated or tight-buffered with a buffer **36** that is stripped back to expose a predetermined length of the end of the field optical fiber **34.** The mechanical splice connector **10** may be further provided with a crimp tube **38** for retaining and strain relieving the buffer **36** of the field optical fiber **34.** With a portion of the buffer **36** removed, the field optical fiber **34** can be inserted and advanced into the rear of the mechanical splice connector **10** between the splice components **22, 24** until the end portion of the field optical fiber **34** makes physical contact with the end portion of the stub optical fiber **14.** Thereafter, the cam member **28** is actuated by moving or rotating the cam member **28** relative to the ferrule holder **20** about the longitudinal axis of the connector **10,** to engage the keel on the splice component **24** and thereby force the lower splice component **24** in the direction of the upper splice component **22.** Movement of the lower splice component **24** causes the end portion of the stub optical fiber **14** and the end portion of the field optical fiber **34** to seat within the V-shaped groove formed in the lower splice component **24,** thereby aligning and securing the field optical fiber **34** relative to the stub optical fiber **14** between the splice components. Accordingly, the field optical fiber **34** is optically coupled to the stub optical fiber **14** as a mechanical splice for transmitting an optical signal between the field optical fiber **34** and stub optical fiber **14.**

To make an acceptable mechanical splice, a clean and undamaged optical fiber **34** should be inserted into the fiber optic connector **10** for achieving a satisfactory termination with the stub optical fiber **14** within the connector. A conventional practice is to insert the optical fiber **34** manually within the fiber optic connector **10** in the installation tool by aligning the optical fiber **34** with a crimp tube of the fiber optic connector **10.** This conventional practice is generally sufficient for highly-trained and experienced technicians; however, less experienced technicians may lack the know-how and/or have difficulty making high-quality termination in the field. Moreover, the conventional practice typically includes re-cleaving a damaged optical fiber **34** and/or cleaning optical fibers **34** contaminated with debris when the optical fibers **34** are not properly inserted in the fiber optic connector **10** on the first attempt. In other words, depending on the skill, eyesight, and dexterity of the technician, as well as ambient light, alignment and insertion of the optical fiber **34** in the fiber optic connector **10** may require more than one attempt. Consequently, there is an unresolved need for devices and methods that provide high-quality terminations in the field by the technician.

### SUMMARY OF THE DETAILED DESCRIPTION

Embodiments disclosed herein include detachable optical fiber guides for splice connector installation tools, and related assemblies and methods. The detachable optical fiber guides may be employed to guide and/or self-align an optical fiber into a fiber optic connector disposed within a splice connector installation tool. As non-limiting examples, the detachable optical fiber guides may also be employed to better view the optical fiber during insertion, and also to reduce debris and damage to the optical fiber while being inserted into the fiber optic connector. The detachable optical fiber guides may include optional features to allow the detachable optical fiber guide to be installed and detached toollessly upon and from the splice connector installation tool for convenient installation, and subsequent removal. Optical fiber discussed herein includes one or more optical fibers whether disposed in a common cable jacket or disposed freely of each other outside a cable jacket.

In this regard in one embodiment, a detachable optical fiber guide apparatus is disclosed for guiding a field optical fiber (hereinafter "optical fiber") into a fiber optic connector installed (i.e., held) within a splice connector installation tool. The detachable optical fiber guide apparatus includes a fiber guide configured to receive and guide an optical fiber and an attachment member supporting the fiber guide. The attachment member may be configured to be attached to a splice connector installation tool to align the fiber guide with a fiber entry of the fiber optic connector installed within the splice connector installation tool. The fiber guide may comprise a recess defining an exit opening having a first cross-sectional area. The fiber guide may also include an entry opening opposite the exit opening. The entry opening may have a second cross-sectional area larger than the first cross-sectional area. The exit opening may be configured to be disposed adjacent the fiber entry of the fiber optic connector installed within the splice connector installation tool. The entry opening may be configured to receive the optical fiber and to guide the optical fiber to and through the exit opening into the fiber entry of the fiber optic connector installed within the splice connector installation tool. In this manner, as a non-limiting example, the optical fiber may be inserted through the fiber guide with less debris generation than would otherwise attenuate an optical signal transmitted through a fiber optic connector terminated without using the detachable optical fiber guide apparatus in combination with the splice connector installation tool.

In another embodiment, an optical fiber termination system is disclosed. The optical fiber terminal system includes a splice connector installation tool having a housing forming an internal cavity and a detachable optical fiber guide apparatus. The housing may include a first external surface and a second external surface. The splice connector installation tool may also include a mechanical device which may be at least partially disposed within the internal cavity. The mechanical device may be configured to perform a splice termination of an optical fiber and a stub optical fiber of a fiber optic connector.

Further in this embodiment, the detachable optical fiber guide apparatus may be configured to guide an optical fiber into a splice connector installation tool. The detachable optical fiber guide apparatus includes a fiber guide configured to receive and guide an optical fiber and an attachment member supporting the fiber guide. The attachment member may be configured to be attached to a splice connector installation tool to align the fiber guide with a fiber entry of the fiber optic connector installed within the splice connector installation tool. The fiber guide may comprise a recess defining an exit opening having a first cross-sectional area. The fiber guide may also include an entry opening opposite the exit opening. The entry opening may have a second cross-sectional area larger than the first cross-sectional area. The exit opening may be configured to be disposed adjacent the fiber entry of the fiber optic connector installed within the splice connector installation tool. The entry opening may be configured to receive the optical fiber and to guide the optical fiber to and through the exit opening into the fiber entry of the fiber optic connector installed within the splice connector installation tool. In this manner, as a non-limiting example, the optical fiber may be quickly inserted into the fiber optic connector attached to the splice connector installation tool with less chance of damage to the optical fiber.

In another embodiment, a method for splicing an optical fiber to a stub optical fiber in a fiber optic connector is disclosed. The method may include providing a fiber optic splice connector installation tool comprising a housing and includes providing a detachable optical fiber guide apparatus having a fiber guide and an attachment member. The method may then include aligning the fiber guide with a fiber entry of the fiber optic connector installed within the splice connector installation tool by attaching the attachment member to the fiber optic splice installation tool. The method may also include cleaning the fiber guide and then attaching the fiber guide to the attachment member. The method may then include inserting an end portion of an optical fiber through the fiber guide and into the fiber optic connector. The method may also include terminating the optical fiber to a stub optical fiber of the fiber optic connector. The method may then include removing the detachable optical fiber guide apparatus from the fiber optic splice connector installation tool. In this manner, as a non-limiting example, the optical fiber may be inserted into the fiber optic connector quickly and with minimal operator skill required.

Additional features and advantages will be set forth in the detailed description which follows, and in part will be readily apparent to those skilled in the art from that description or recognized by practicing the embodiments as described herein, including the detailed description that follows, the claims, as well as the appended drawings.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

### BRIEF DESCRIPTION OF THE FIGURES

**FIG. 1A** is a side cutaway view of an optical fiber prior to termination with a stub optical fiber of an explanatory prior art mechanical splice fiber optic connector;

**FIG. 1B** is a side cutaway view of the optical fiber terminated with the stub optical fiber of the prior art mechanical splice fiber optic connector of **FIG. 1A****;**

**FIG. 2A** is a top view and partial cutaway view of an exemplary fiber optic connector installed in an exemplary splice connector installation tool adjacent to an exemplary detachable optical fiber guide apparatus;

**FIG. 2B** is a perspective view of the detachable optical fiber guide apparatus of **FIG. 2A** installed on the splice connector installation tool of **FIG. 2A** and an optical fiber aligned with a fiber entry of the fiber optic connector of **FIG. 2A****;**

**FIG. 2C** is a front view of the detachable optical fiber guide apparatus of **FIG. 2A** installed on the splice connector installation tool of **FIG. 2A****;**

**FIG. 3A** is a front view of the exemplary detachable optical fiber guide apparatus of **FIG. 2A****;**

**FIG. 3B** is a top view of the detachable optical fiber guide apparatus of **FIG. 2A****;**

**FIG. 3C** is a left side view of the detachable optical fiber guide apparatus of **FIG. 2A****;**

**FIG. 3D** is a top view of a fiber guide of the detachable optical fiber guide apparatus of **FIG. 2A****;**

**FIG. 3E** is a rear view of the fiber guide of the detachable optical fiber guide apparatus of **FIG. 2A****;**

**FIG. 3F** is a front view of the fiber guide of the detachable optical fiber guide apparatus of **FIG. 2A****;**

**FIG. 4** is a side schematic conceptual view of a methodology for measuring the reflectivity of a plating material that may be used for the fiber guide of the detachable optical fiber guide apparatus of **FIG. 2A****;**

**FIG. 5** illustrates an exemplary process for splicing the optical fiber to a stub optical fiber in a fiber optic connector of **FIG. 2A****;**

**FIG. 6A** is a front view of another exemplary detachable optical fiber guide apparatus with a fiber guide of the detachable optical fiber guide apparatus detached from an attachment member;

**FIG. 6B** is a front view of the detachable optical fiber guide apparatus of **FIG. 6A** with the fiber guide of the detachable optical fiber guide apparatus attached to the attachment member;

**FIG. 6C** is a left-side view of the detachable optical fiber guide apparatus of **FIG. 6A** with the fiber guide of the detachable optical fiber guide apparatus attached to the attachment member;

**FIG. 7** is a perspective view of yet another exemplary detachable optical fiber guide apparatus attached on the splice connector installation tool, and the splice connector installation tool was previously depicted in **FIG. 2A****;**

**FIG. 8A** is a front view of the detachable optical fiber guide apparatus of **FIG.** 7 with a fiber guide removed for clarity;

**FIG. 8B** is a top view of the detachable optical fiber guide apparatus of **FIG. 7** with the fiber guide removed for clarity;

**FIG. 8C** is a left-side view of the detachable optical fiber guide apparatus of **FIG. 7** with the fiber guide removed for clarity;

**FIG. 9** is a perspective view of yet even another exemplary detachable optical fiber guide apparatus attached on the splice connector installation tool, and the splice connector installation tool was previously depicted in **FIG. 2A****;**

**FIG. 10A** is a front view of the detachable optical fiber guide apparatus of **FIG. 9** with a fiber guide removed;

**FIG. 10B** is a top view of the detachable optical fiber guide apparatus of **FIG. 9** with the fiber guide removed;

**FIG. 10C** is a left-side view of the detachable optical fiber guide apparatus of **FIG. 9** with the fiber guide removed; and

**FIG. 10D** is a top view of the detachable optical fiber guide apparatus of **FIG. 9** with the fiber guide attached and showing a range of motion of the fiber guide.

### DETAILED DESCRIPTION

Reference will now be made in detail to the embodiments, examples of which are illustrated in the accompanying drawings, in which some, but not all embodiments are shown. Indeed, the concepts may be embodied in many different forms and should not be construed as limiting herein; rather, these embodiments are provided so that this disclosure will satisfy applicable legal requirements. Whenever possible, like reference numbers will be used to refer to like components or parts.

Embodiments disclosed herein include detachable optical fiber guides for splice connector installation tools, and related assemblies and methods. The detachable optical fiber guides may be employed to guide and/or self-align an optical fiber into a fiber optic connector disposed within a splice connector installation tool. As non-limiting examples, the detachable optical fiber guides may also be employed to better view the optical fiber during insertion, and also to reduce debris and damage to the optical fiber while being inserted into the fiber optic connector. The detachable optical fiber guides may include optional features to allow the detachable optical fiber guide to be installed and detached toollessly upon and from the splice connector installation tool for convenient installation, and subsequent removal. Optical fiber discussed herein includes one or more optical fibers whether disposed in a common cable jacket or disposed freely of each other outside a cable jacket.

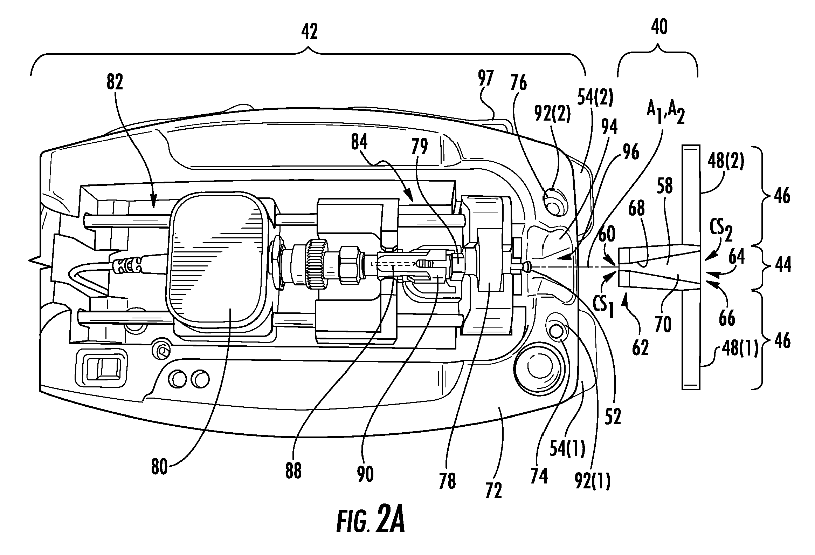

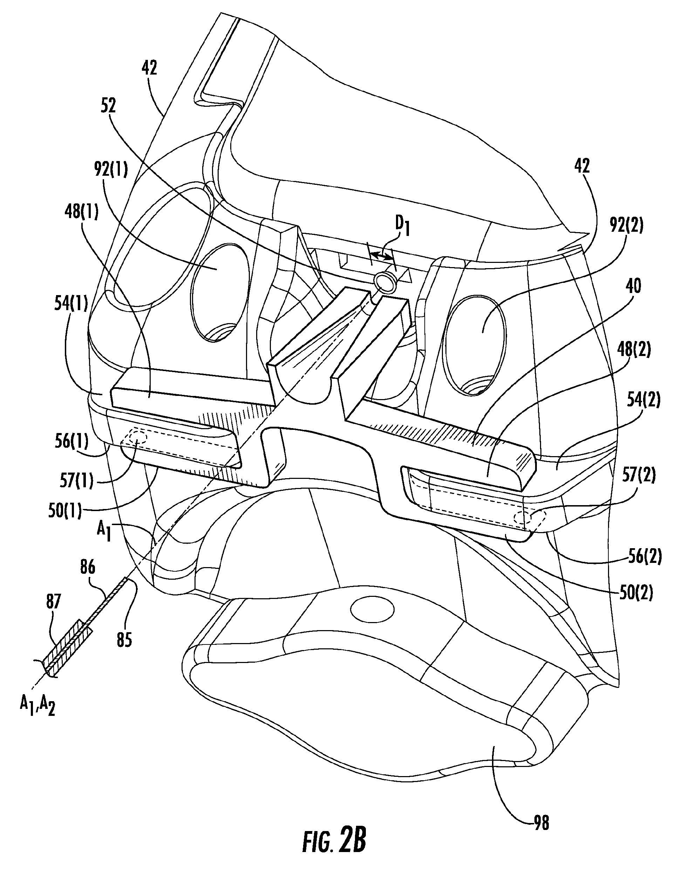

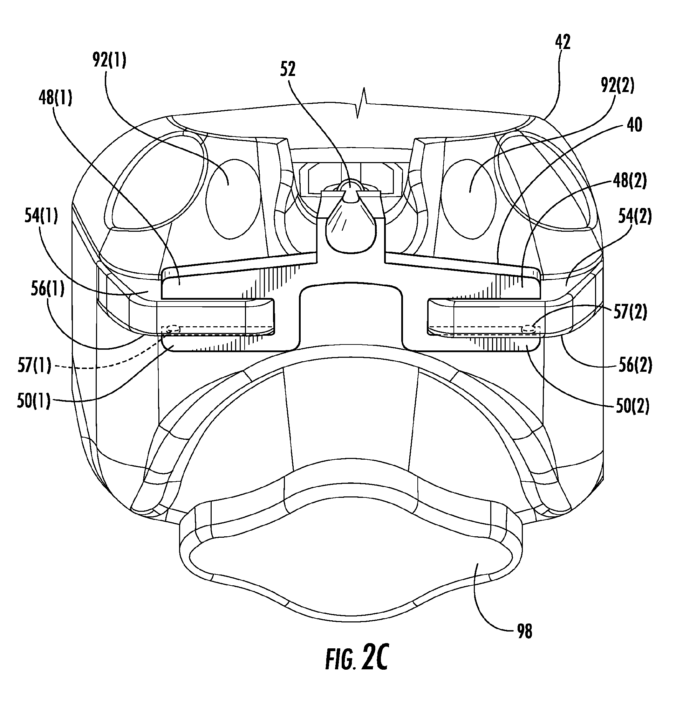

In this regard, **FIG. 2A** is a top view of an exemplary detachable optical fiber guide apparatus **40** adjacent to a splice connector installation tool **42.** In this explanatory embodiment, the splice connector installation tool **42** is useful for a UniCam® field-installable connector commercially available from Corning Cable Systems, LLC of Hickory, North Carolina. The detachable optical fiber guide apparatus **40** includes various features seen from the top view including a fiber guide **44** and an attachment member **46.** The attachment member **46** may include first extension members **48(1), 48(2)** and second extension members **50(1), 50(2)** (see **FIGS. 2B** and **2C****).** The attachment member **46** may be configured to be attached to the splice connector installation tool **42** to align the fiber guide **44** with a fiber entry **52** of a fiber optic connector **90** installed within the splice connector installation tool **42.** In order to align the fiber guide **44,** the first extension members **48(1), 48(2)** may be configured to abut first exterior surfaces **54(1), 54(2)** of the splice connector installation tool **42,** and the second extension members **50(1), 50(2)** may be configured to abut the second exterior surfaces **56(1), 56(2)** of the splice connector installation tool **42** as shown in **FIGS. 2B** and **2C****.** The first extension members **48(1), 48(2)** and second extension members 50(1), **50(2)** may have dimples **57(1), 57(2)** attached to form the abutment with the first exterior surfaces **54(1), 54(2)** and the second exterior surfaces **56(1), 56(2).**

The dimples **57(1), 57(2)** may be made of a soft flexible material, for example silicone. In some embodiments, the dimples **57(1), 57(2)** may be made of the same material as the first extension members **48(1), 48(2)** and the second extension members **50(1), 50(2),** for example, thermoplastic, to be attached using a mechanical fit to the splice connector installation tool **42.** The dimples **57(1), 57(2)** may be adhered to the first extension members **48(1), 48(2)** and the second extension members **50(1), 50(2)** with an adhesive, for example epoxy, to form a tight slip-free abutment or formed integrally therewith. The dimples **57(1), 57(2)** may help prevent the detachable optical fiber guide apparatus **40** from becoming misaligned by slipping after being attached.

With continuing reference to **FIG. 2A****,** the fiber guide **44** may include a recess **58** defining an exit opening **60** having a first cross-sectional area **CS₁** and disposed on a first end **62** of the fiber guide **44.** The fiber guide **44** may also include an entry opening **64** having a second cross-sectional area **CS₂ larger** than the first cross-sectional area **CS₁**. The entry opening **64** may be disposed on a second end **66** of the fiber guide **44.** The recess **58** may include one or more recess surfaces **68** disposed at a suitable angle such as within twenty (20) degrees from an axis **A₁** of the splice connector installation tool **42.** Ideally the recess surfaces **68** may be disposed within fifteen (15) degrees of the axis **A₁** to reduce debris, but other angles are possible. The recess surfaces **68** may include a bottom recess surface portion **70** disposed at a suitable angle from axis **A₁** such as within two (2) degrees of the axis **A₁** of the splice connector installation tool **42.**

As discussed above, the detachable optical fiber guide apparatus **40** may be attached to the splice connector installation tool **42.** Some non-limiting features of the splice connector installation tool **42** which appear in the top view of **FIG. 2A** may include the housing **72,** termination status indicators such as unacceptable termination signal **74** and/or acceptable termination signal **76,** cam actuator **78,** and a visual fault locator system **80.** The housing **72** may form an internal cavity **82** within which a mechanical device **84** and the visual fault locator system **80** may be disposed.

The mechanical device **84** may be utilized to perform a splice termination of an end portion **85** of an optical fiber **86** with a stub optical fiber **88** of the fiber optic connector **90.** The optical fiber **86** may include a buffer **87** for protection and/or stress isolation or not depending on the cable and/or connector design. When the splice termination of the optical fiber **86** and the stub optical fiber **88** is completed then the optical fiber **86** and the stub optical fiber **88** are optically coupled by way of a mechanical splice. The cam actuator **78** twists a portion of the fiber optic connector **90** called a cam member **79** of the fiber optic connector **90** to perform the splice termination. **FIG. 2A** depicts the splice connector installation tool **42** with the fiber optic connector **90** installed and the stub optical fiber **88** internal of the fiber optic connector **90** shown in phantom lines.

Determining whether a termination of an optical fiber **86** has been properly performed can be important. In this regard in this embodiment, the visual fault locator system **80,** discussed above, may be located in the internal cavity **82** of the housing **72** and determines whether the splice termination is properly performed. The visual fault locator system **80** may comprise one or more optical lenses and light sensors to determine if the quality and intensity of light conveyed between the optical fiber **86** and the stub optical fiber **88** meet performance specifications. The unacceptable termination signal **74** or the acceptable termination signal **76** (i.e., termination status indicators) may illuminate to communicate whether the splice termination is properly performed. The unacceptable termination signal **74** and the acceptable termination signal **76** may be located in second recesses **92(1), 92(2)** respectively within the housing **72.**

With continuing reference to **FIGS. 2B** and **2C****,** the first exterior surfaces **54(1), 54(2)** and the second exterior surfaces **56(1), 56(2)** discussed above may also be included as part of the housing **72.** The housing **72** may also include a housing recess **94** forming a housing opening **96** to enable the optical fiber **86** to be inserted into the fiber entry **52.** The fiber entry **52** may have a width **D₁ (****FIG. 2B****).** In one embodiment the width **D₁** may be two (2) millimeters, but other suitable widths are possible. The splice connector installation tool **42** may include a splice activation handle **97** to be engaged to initiate optical coupling between the optical fiber **86** and the stub optical fiber **88** such as by rotating a cam actuator. As shown in **FIGS. 2A** and **2B****,** the splice connector installation tool **42** may include a crimp knob **98** to deform the crimp tube of the fiber optic connector **90** after the acceptable termination signal **76** is received if desired. Access and operation of the crimp knob **98** may continue when the detachable optical fiber guide apparatus **40** is attached to the splice connector installation tool **42.** In other words, the optical fiber guide apparatus **40** does not impede the operation of the installation tool **42.**

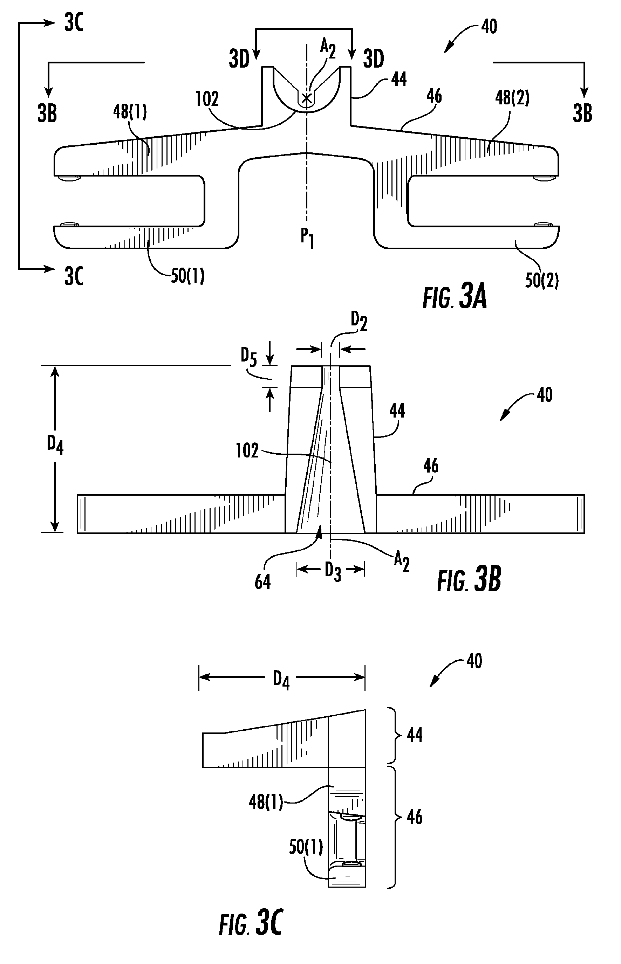

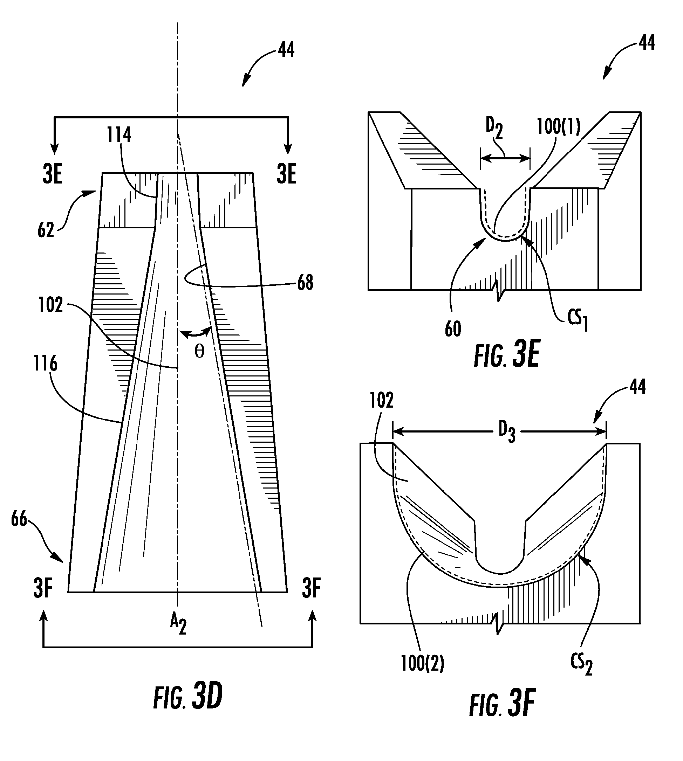

**FIGS. 3A** through **3F** depict additional features of the detachable optical fiber guide apparatus **40.** These additional features include the fiber guide **44** and attachment member **46.** The fiber guide **44** may be integral to the attachment member **46.** Integrating the fiber guide **44** and the attachment member **46** may reduce manufacturing expense by reducing the number of components and may reduce installation time during use by eliminating assembly steps or tasks. For example, with reference to **FIGS. 3A** through **3F****,** the fiber guide **44** may include the recess **58** which may guide the optical fiber **86** to the fiber entry **52** of the fiber optic connector **90** when the fiber optic connector **90** is installed within the splice connector installation tool **42.** The recess **58** may also define the exit opening **60 (****FIG. 3E****)** having the first cross-sectional area **CS₁** and disposed on the first end **62** of the fiber guide **44.** A width **D₂ (****FIG. 3B****)** in one embodiment may be one (1) millimeter, but other suitable widths are possible. The width **D₂** of the exit opening **60** may be smaller than the width **D₁** of the fiber entry **52** of the fiber optic connector **90** to provide sufficient precision for the optical fiber **86** to enter the fiber entry **52.** The first cross-sectional area **CS₁** may have a curvilinear shape **100(1) (****FIG. 3E****)** to avoid sharp corners that may catch the optical fiber **86** before the optical fiber **86** departs from the fiber guide **44.** Also, the curvilinear shape **100(1)** may facilitate an easier operation to make smooth edges, otherwise sharp edges may damage the optical fiber **86** or be a ready source of debris to contaminate the optical fiber **86.** The curvilinear shape **100(1)** may also enable the recess **58** to be more easily cleaned to remove debris.

The fiber guide **44** may also include the entry opening **64** which may permit the optical fiber **86** to enter the recess **58.** The entry opening **64** may be disposed on the second end **66** of the fiber guide **44.** The entry opening **64** may have the second cross-sectional area **CS₂** having a width of **D₃ (****FIG. 3B****)** and a curvilinear shape **100(2) (****FIG. 3F****).** The second cross-sectional area **CS₂** may be larger than the first cross-sectional area **CS₁** as the width **D₃** may be larger than the width **D₂.**

There are additional features of the recess 58 which may be a distance **D₄** along the longitudinal axis **A₂.** Embodiments of the recess **58** may include the distance **D₄** no less than about five (5) millimeters long and no more than about twenty-five (25) millimeters long, as a non-limiting example, but other lengths are possible. A distance **D₄** cannot be too short because the width **D₂** of the exit opening **60** may be restricted by the width **D₁** of the fiber entry **52,** the maximum theta **(0)** to allow tolerable damage to the optical fiber **86** and debris generation, and the width **D₃** of the entry opening **64** to allow the optical fiber **86** to be easily inserted into the recess **58** of the fiber guide **44.** A maximum length of the distance **D₄** is limited by a geometric plane (not shown) defined by the crimp knob **98** and the first exterior surfaces **54(1), 54(2)** and second exterior surfaces **56(1), 56(2)** that are used to stand the splice connector installation tool **42** vertically. Further, the distance **D₄** cannot be too long because the optical fiber **86** may be more difficult to control at the first end **62** of the fiber guide **44** when the first end **62** becomes distant from the second end **66.**

Two symmetrical elements for **48, 50, 54, 56, 57,** and **92** are shown in the embodiment depicted in **FIGS. 2A** through **3C** but other embodiments could also include one, or more than two of these elements and they may be asymmetrical if desired.

The recess **58** may include the one or more recess surfaces **68** which may be optionally plated with a metallic plating material **102** to prevent the optical fiber **86** from stopping along the recess **58.** The metallic plating material **102** allows an inexpensive material, for example, thermoplastic, to be used to manufacture an interior of the detachable optical fiber guide apparatus **40** to save manufacturing costs. In some embodiments the detachable optical fiber guide apparatus **40** may be wholly made of metal, for example a nickel alloy or other suitable material.

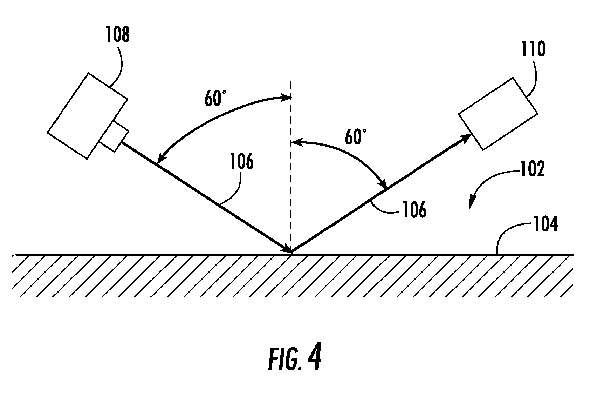

As stated, the fiber guide **44** may optionally be fully or at least partially plated with the metallic plating material **102.** The metallic plating material **102** may be a matte-finish material **104** comprising nickel and having a dark color, for example, black. As schematically illustrated in **FIG. 4****,** the matte-finish material **104** may reflect no more than five (5) percent of a visual-light beam **106** radiating from a light source **108** reflected sixty (60) degrees from perpendicular to the matte-finish material **104** as measured by a light-intensity measurement device **110.** The visual-light beam **106** may comprise electromagnetic radiation having a wavelength of more than 380 nanometers and less than 740 nanometers. An operator may be better able to insert the optical fiber **86** through the recess **58** and into the fiber entry **52** when the optical fiber **86** is easily seen. The optical fiber **86** is more easily seen against the matte-finish material **104** because limited glare from reflection from the matte-finish material **104** provides a high contrast.

The matte-finish material **104** may also be damage-resistant, forming a surface configured to reduce or not cause debris when in abutment with the optical fiber **86.** The debris may be caused when the optical fiber **86** scratches the matte-finish material **104.** Debris may be generated when the optical fiber **86** contacts the matte-finish material **104** of the recess **58.** The debris generation may be controlled by a number of factors including a hardness of the matte-finish material **104** relative to the optical fiber **86,** and/or the geometry of the recess **58.** The metallic plating material **102** may not have too low of a hardness compared to the optical fiber **86** or the metallic plating material **102** will easily deform upon contact with the optical fiber **86** and cause debris. The optical fiber **86** may have a Mohs scale of hardness of about seven (7) as one non-limiting example. As an example, the metallic plating material **102** may have a Mohs scale of hardness of no more than seven (7) and no less than three (3), but other hardness levels are possible beside this non-limiting example. The ideal hardness for the metallic plating material **102** may be four (4) considering performance and cost issues. The metallic plating material **102** may also have a surface roughness of less than thirteen (13) microinches as a non-limiting example. The relative hardness of the metallic plating material **102** and low relative surface roughness discourages the generation of debris upon contact with the optical fiber **86.**

The rate of debris generation may be low at an angle of attack of zero (0) degrees when the optical fiber is parallel to the metallic plating material **102** of the recess **58.** However, as the optical fiber **86** approaches a position perpendicular to the metallic plating material **102** when the angle of attack is ninety (90) degrees, the rate of debris generation increases. **Tables 1A** and **1B** shown below depict empirical data showing observations of debris generation and the optical fiber **86.** In **Tables 1A** and **1B,** seven (7) different optical fibers **86** were used for seven different angles of attack from ten (10) degrees to seventy (70) degrees to contact or "strike" the metallic plating material **102.** Each of the seven (7) different optical fibers **86** experienced five (5) cycles of strikes to the metallic plating material **102** at a given angle of attack. Observations were recorded during each cycle in **Table 1A** (Non-Limiting Examples of Condition of Optical Fiber and Level of Debris For Angles of Attack From Ten (10) to Forty (40) Degrees) or **Table 1B** (Non-Limiting Examples of Condition of Optical Fiber and Level of Debris For Angles of Attack From Fifty (50) to Seventy (70) Degrees) regarding the damage to the optical fiber **86** and the recess **58,** and the debris generated each cycle. Also, at the beginning of each cycle the optical fiber **86** was cleaved and both the recess **58** and the optical fiber **86** were cleaned. The empirical data shows that angles of attack less than twenty (20) degrees have minimum debris generation and minimum damage to the optical fiber **86.**

**Table 1A: Non-Limiting Examples of Condition of Optical Fiber and Level of Debris For Angles of Attack From Ten (10) to Forty (40) Degrees**

| Fiber Optic Strikes | Condition of Optical Fiber and Level of Debris For Each Angle of Attack | | | |
|---|---|---|---|---|
| | 10 Degrees | 20 Degrees | 30 Degrees | 40 Degrees |
| First | No change | Debris about 1/2 radius inward and about 1/2 radius width | Small deposit 1/3 of radius | Debris scattered across one side |
| Second | Small deposit of debris added from edge to 1/4 radius | Debris with small width but extends 5/6 of the way to core | Small deposit 1/2 of radius | Large deposit about 2/3 radius inward |
| Third | Small deposit of debris added from edge to 1/4 radius | Small debris 1/2 radius inward | Small deposit 1/2 of radius | Large amount of debris scattered across surface |
| Fourth | Small deposit of debris added from edge to 1/3 radius | Large deposit with string of powder across fiber | Small deposit 1/3 of radius | Large deposit 1/2 radius inward |
| Fifth | Small deposit of debris added from edge to 1/2 radius | Small debris 1/2 radius inward | 2 large deposits with debris scattered across radial surface | Large deposit almost to core and scattered across radial |
| Observations of fiber guide before first optical fiber strike | Has scratches from rear top diagonal toward front bottom | Vertical scratches from mold line to top | No scratches | Scratches across top of front end |
| Observations of fiber guide after fifth optical fiber strike | No discernable change | No discernable change | No discernable change | 2.5 scratches cross the midsection, most likely from same fiber |

**Table 1B: Non-Limiting Examples of Condition of Optical Fiber and Level of Debris For Angles of Attack From Fifty (50) to Seventy (70) Degrees**

| Fiber Optic Strikes | Condition of Optical Fiber and Level of Debris for Each Angle of Attack | | |
|---|---|---|---|
| | 50 Degrees | 60 Degrees | 70 Degrees |
| First | Debris scattered all the way to core and across radially | Debris deposit to center of fiber and small deposit across | 1/2 of fiber destroyed |
| Second | Small deposit 1/2 radius inward | Destroyed across entire fiber with large deposit on one end | 1/3 destroyed |
| Third | Piece of fiber missing, debris scattered to core | 1/3 of fiber destroyed | Large area of debris with small deposit across |
| Fourth | Small deposit 2/3 radius inward with tiny deposit adjacent | A little more destroyed than third cleave | Debris all around surface of fiber |
| Fifth | Large deposit inward to core | Nearly 1/2 of fiber destroyed | 1/2 of fiber destroyed inwardly with radial surface damage |
| Observations of fiber guide before first optical fiber strike | Large diagonal scratch at top | Divot at rear mid; scratches extend from front diagonally | Vertical scratches at front |
| Observations of fiber guide after fifth optical fiber strike | No discernable change | Multiple scratches across in two different places | Multiple scratches were fibers stuck to device |

Using the information from **Tables 1A** and **1B,** where a smaller angle of attack reduces debris and optical fiber damage. In this regard, as a non-limiting example, the recess **58** may include the one or more recess surfaces **68** disposed within twenty (20) degrees from the longitudinal axis **A₁** of the splice connector installation tool **42,** but other angles are possible. **FIG. 3D** illustrates an exemplary angular measurement of the recess surfaces **68** as angle theta **(θ)** from a longitudinal axis **A₂** of the fiber guide **44.** The longitudinal axis **A₂** enters the recess **58** at the entry opening **64** and exits the recess **58** at the exit opening **60.** When the fiber guide **44** is aligned with the splice connector installation tool **42,** then the axis **A₁** and the longitudinal axis **A₂** are aligned as depicted in **FIG. 2****B.** Ideally, the recess surfaces **68** may be disposed within fifteen (15) degrees of the axis **A₁** to further reduce debris and damage to the optical fiber **86.** However, not every portion of the recess surfaces **68** may have the same angular disposition to the longitudinal axis **A₂** in this embodiment. In other words, compound surfaces/angles are possible with the concepts disclosed. When axis **A₁** is aligned with longitudinal axis **A₂** then the detachable optical fiber guide apparatus is aligned with the splice connector installation tool **42.** For example, in **FIG. 3D** a portion **114** of recess surfaces **68** having a length **D₅** along the axis **A₁** may be parallel (0 degrees) to the axis **A₁**, yet portion **116** of the recess surfaces **68** may be fifteen (15) degrees.

Moreover, the recess surfaces **68** may include the bottom recess surface portion **70** disposed within four (4) degrees of the axis **A₁** of the splice connector installation tool **42,** or preferably no more than two (2) degrees, as non-limiting examples. In embodiments where the recess surfaces **68** may have the cross sections **CS₁, CS₂** in the curvilinear shape **100,** then the bottom recess surface portion **70** is a portion of the recess surfaces **68** that is within a vertical geometric plane **P₁** (see **FIG. 3A****)** coincident with the axis **A₁**. The angular disposition of the bottom recess surface portion **70** may limit the change in vertical direction experienced by the optical fiber **86.** This angular disposition also makes it easier for the optical fiber **86** to be inserted into the fiber entry **52** by reducing an opportunity to misalign the optical fiber **86** vertically with respect to the fiber entry **52.**

With continuing reference to **FIGS. 3A** through **3C****,** the attachment member **46** also has additional features. The attachment member **46** supports the fiber guide **44** and may be configured to be attached to a splice connector installation tool **42** to align the fiber guide **44** with the fiber entry **52** of the fiber optic connector **90** installed within the splice connector installation tool **42 (****FIG. 2B****).** The attachment member **46** may be configured for tool-less attachment and tool-less detachment from the splice connector installation tool **42.** Thus, the attachment member **46** may be attached and detached manually, wherein the attachment member **46** may include an extension member for toolless attachment to a feature of the housing **72** of the splice connector installation tool **42.** For example, in one embodiment the attachment member **46** may include the at least one first extension member **48** configured to abut the first exterior surface **54** of the splice connector installation tool **42.** The attachment member **46** may also include the at least one second extension member **50** configured to abut a second exterior surface **56** of the splice connector installation tool **42** opposite the first exterior surface **54.** In this regard, the first exterior surface **54** and the second exterior surface **56** may also be disposed between the first extension member **48** and the second extension member **50.**

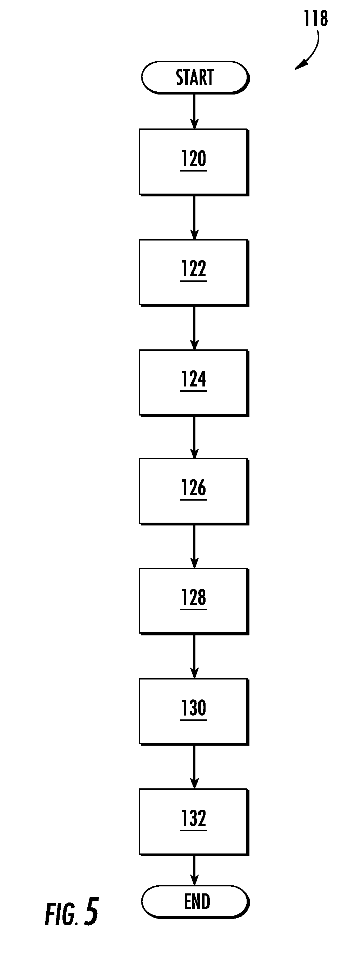

Now that the features of the detachable optical fiber guide apparatus **40** have been discussed, an exemplary method **118** for splicing the optical fiber **86** in the fiber optic connector **90** may be disclosed in **FIG.** 5. In the first task of the process, the fiber optic splice connector installation tool may be provided comprising a housing (block **120** in **FIG. 5****).** The fiber optic connector **90,** which includes a stub optical fiber **88,** may be installed in the splice connector installation tool **42** wherein the stub optical fiber **88** may be aligned with the axis **A₁** of the splice connector installation tool **42** and may be accessible from the fiber entry **52.**

Next, the detachable optical fiber guide apparatus **40** is provided including a fiber guide **44** and an attachment member **46** (block **122** in **FIG. 5****).** The fiber guide **44** may then be aligned with a fiber entry **52** of the fiber optic connector **90** installed within the splice connector installation tool **42** by attaching the attachment member **46** to the splice connector installation tool **42** (block **124** in **FIG. 5****).** The attachment member **46** may be attached to the splice connector installation tool **42** by abutting the at least one first extension member **48** of the attachment member **46** with a first exterior surface **54** of the splice connector installation tool **42.** Also, the at least one second extension member **50** of the attachment member **46** may be abutted with a second exterior surface **56** of the splice connector installation tool **42** wherein the second exterior surface **56** may be opposite of the first exterior surface **54.**

Next, the fiber guide **44** may be cleaned and then attached to the attachment member **46** (block **126** in **FIG.** 5). The end portion **85** of the optical fiber **86** may then be inserted through the fiber guide **44** and into the fiber optic connector **90** through the fiber entry **52** (block **128** in **FIG. 5****).** The optical fiber **86** may be received in the recess **58** of the fiber guide **44** through the entry opening **64.** The recess **58** may define the exit opening **60** having the first cross-sectional area **CS₁.** The recess **58** may be disposed on the first end **62** of the fiber guide **44.** The entry opening **64** may have the second cross-sectional area **CS₂** larger than the first cross-sectional area **CS₁** and may be disposed on the second end **66** of the fiber guide **44.** The second end **66** may be opposite the first end **62.** The exit opening **60** may be configured to be disposed adjacent the fiber entry **52** of the fiber optic connector **90** installed within the splice connector installation tool **42.**

Moreover, the optical fiber **86** may traverse the fiber guide **44** along a bottom recess surface portion **70** of the recess **58.** The bottom recess surface portion **70** may be disposed within two degrees of the axis **A₁** of the splice connector installation tool **42.** The optical fiber **86** may exit the fiber guide **44** through the exit opening **60** at the first end **62** of the fiber guide **44.** The second cross-section **CS₂** of the entry opening **64** may be larger than the first cross-section **CS₁** of the exit opening **60.** Next, the optical fiber **86** may be terminated to a stub optical fiber **88** of the fiber optic connector **90** (block **130** in **FIG. 5****).** Next, the detachable optical fiber guide apparatus **40** may be removed from the splice connector installation tool **42** (block **132** in **FIG. 5****).**

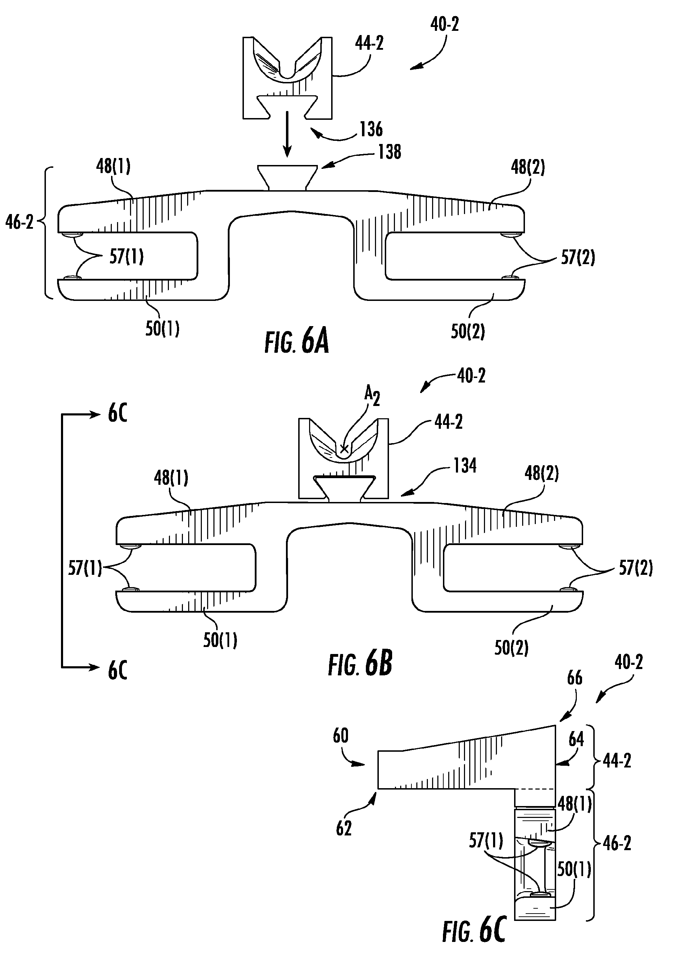

There are other embodiments of the detachable optical fiber guide apparatus **40.** A second embodiment is depicted in **FIGS. 6A** through **6C** as detachable optical fiber guide apparatus **40-2** comprising a fiber guide **44-2** and attachment member **46-2.** The fiber guide **44-2** may be removably attached to the attachment member **46-2.** The fiber guide **44-2** may be adapted to be toollessly attached and toollessly detached from the attachment member **46-2.** The fiber guide **44-2** may be removably attached to the attachment member with a sliding dovetail joint **134** including a female portion **136** and a male portion **138.** As shown in **FIGS. 6A** through **6C****,** the female portion **136** and the male portion **138** may be a part of the fiber guide **44-2** and the attachment member **46-2** respectively. However, the female portion **136** and the male portion **138** may be a part of the attachment member **46-2** and the fiber guide **44-2** respectively.

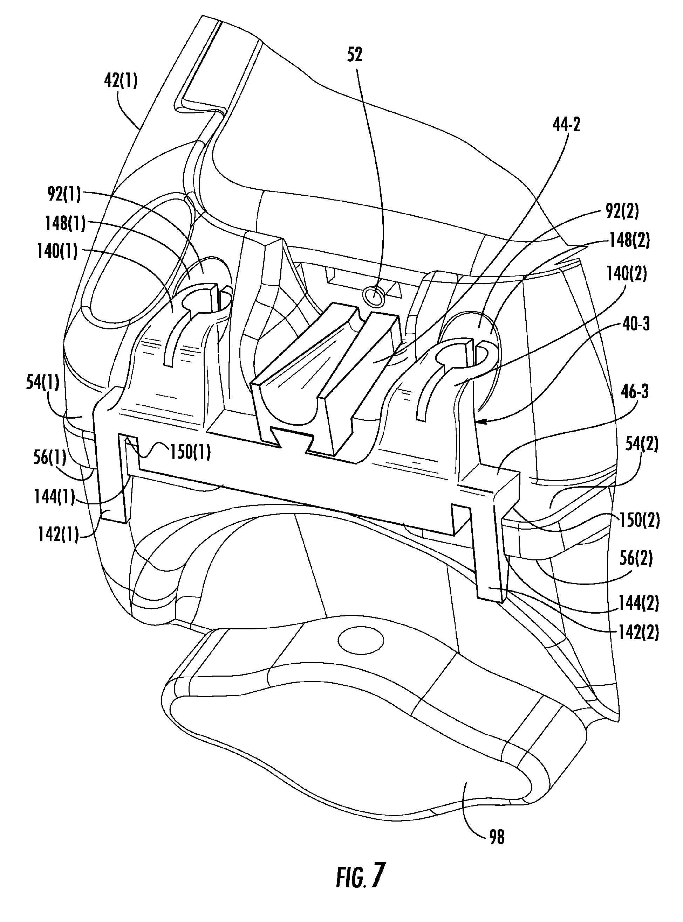

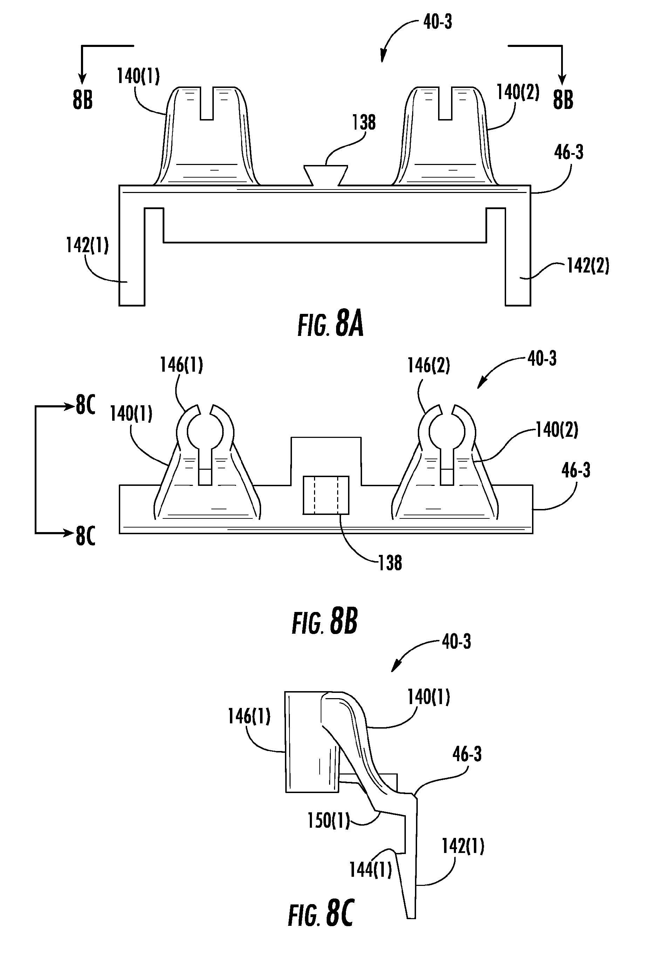

**FIG. 7** depicts another embodiment in the form of detachable optical fiber guide apparatus **40-3** attached to the splice connector installation tool **42** and comprising the fiber guide **44-2** and attachment member **46-3.** **FIGS. 8A** through **8C** depict details of the detachable optical fiber guide apparatus **40-3.**

The fiber guide **44-2** has been disclosed above in an earlier embodiment and so will not be disclosed again to eliminate redundancy.

With continuing reference to **FIGS.** 7 through **8C****,** the attachment member **46-3** includes at least one third extension member **140(1), 140(2)** supported by second recesses **92(1), 92(2)** in the splice connector installation tool **42.** The attachment member **46-3** may also include fourth extension members **142(1), 142(2)** preventing the third extension members **140(1), 140(2)** from departing from the second recesses **92(1), 92(2).** The fourth extension members **142(1), 142(2)** may include first attachment surfaces **144(1), 144(2)** which communicate with the second exterior surfaces **56(1), 56(2)** of the splice connector installation tool **42.** The third extension members **140(1), 140(2)** may remain in the second recesses **92(1), 92(2)** as long as upper attachment surfaces **146(1), 146(2)** abut second recessed surfaces **148(1), 148(2)** of the second recesses **92(1), 92(2).** The second recesses **92(1), 92(2)** may at least be partially formed by the second recessed surfaces **148(1), 148(2).** The depth of the third extension members **140(1), 140(2)** within the second recesses **92(1), 92(2)** may also be limited. In one non-limiting embodiment, the fourth extension members **142(1), 142(2)** may include lower attachment surfaces **150(1), 150(2)** that may abut the first exterior surfaces **54(1), 54(2)** to prevent the upper attachment surfaces **146(1), 146(2)** from extending into the second recesses **92(1), 92(2)** beyond a specified depth. It may be undesirable to have the upper attachment surface too deep in the second recesses **92(1), 92(2)** because there may be sensitive components in the second recesses **92(1), 92(2);** for example, light-emitting diodes may be in the second recesses **92(1), 92(2)** that signify whether a satisfactory termination has been achieved between the optical fiber **86** and stub optical fiber **88.**

The detachable optical fiber guide apparatus **40-3** may be detached from the splice connector installation tool **42** by pulling the fourth extension members **142(1), 142(2)** away from the splice connector installation tool **42.** Once the first attachment surfaces **144(1), 144(2)** and the lower attachment surfaces **150(1), 150(2)** are no longer abutting the second exterior surfaces **56(1), 56(2)** and the first exterior surfaces **54(1), 54(2),** then the upper attachment surfaces **146(1), 146(2)** may be pulled out of the second recesses **92(1), 92(2)** and the detachable optical fiber guide apparatus **40-3** may be then detached from the splice connector installation tool **42.**

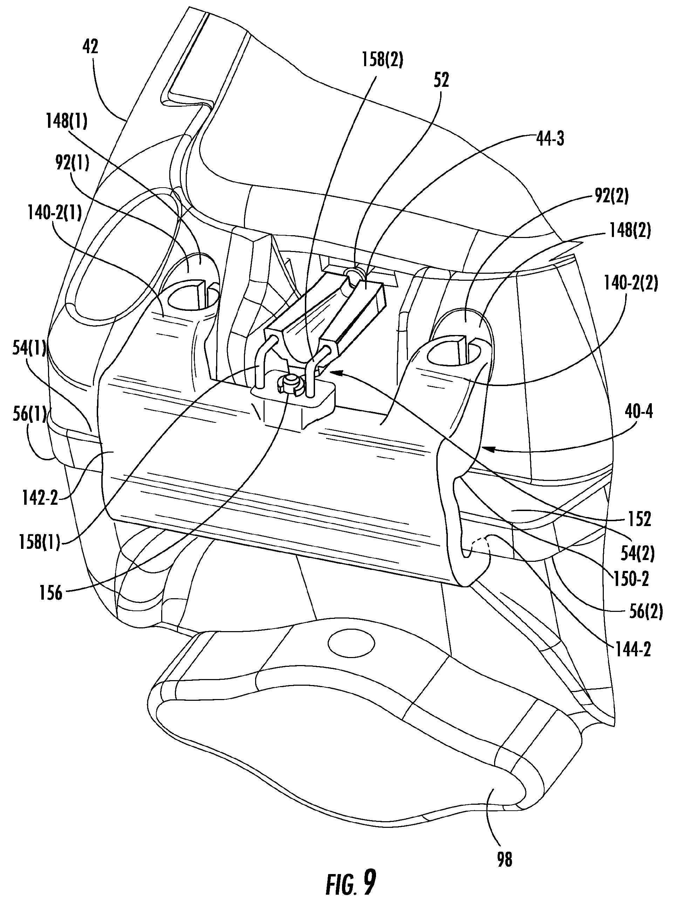

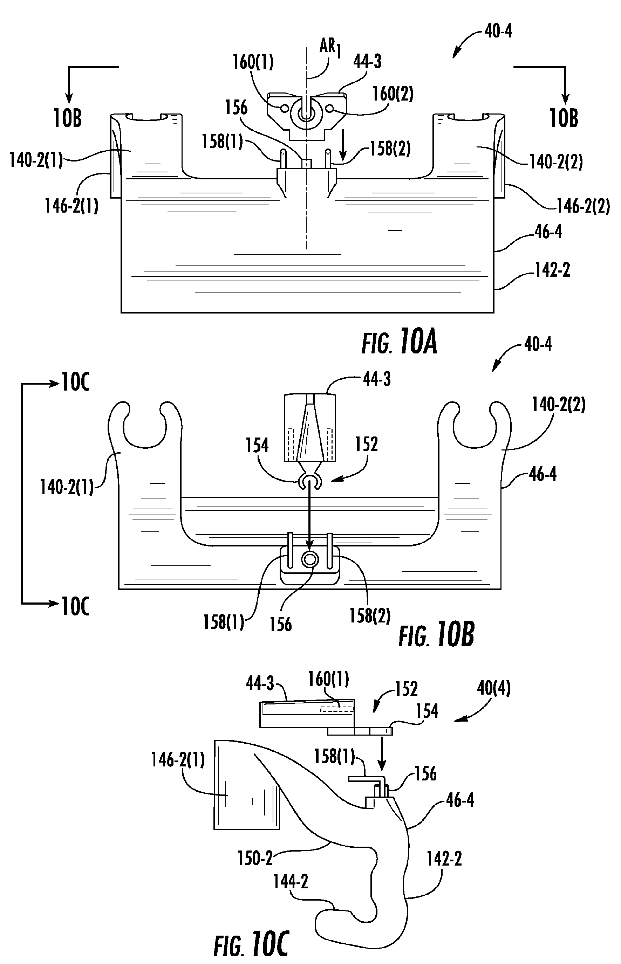

**FIG. 9** depicts yet another embodiment in the form of a detachable optical fiber guide apparatus **40-4** attached to the splice connector installation tool **42** and comprising the fiber guide **44-3** and attachment member **46-4.** **FIGS. 10A** through **10C** depict details of the detachable optical fiber guide apparatus **40-4.**

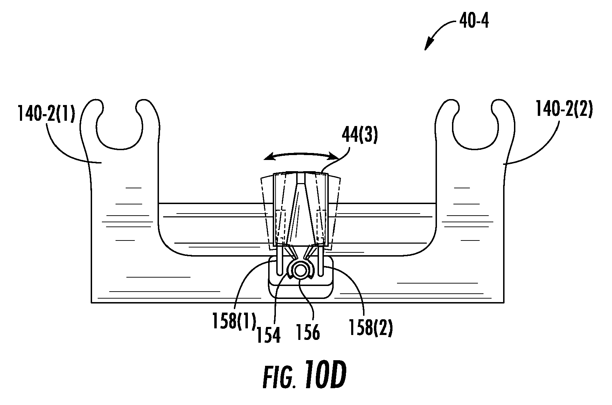

The fiber guide **44-3** may be removably attached to the attachment member **46-4.** In fact, the fiber guide **44-3** may be configured for tool-less attachment and tool-less detachment from the attachment member **46-4.** The fiber guide **44-3** may include a pivot connection member **152** removably attached to the attachment member **46-4.** The pivot connection member **152** may include an attachment extension **154** of the fiber guide **44-3** disposed at least partially around a cylinder **156** extending from the attachment member **46-4.** With only the attachment extension **154** and the cylinder **156,** the fiber guide **44-3** may have no restriction on its angular position relative to the attachment member **46-4** as the fiber guide **44-3** may pivot using the attachment extension **154** around the cylinder **156** about an axis of rotation **AR₁** coincident with the center axis of the cylinder **156.** As a non-limiting embodiment, the attachment member **46-4** may include one or more cantilevered members **158(1), 158(2)** extending from the attachment member **46-4.** The fiber guide **44-3** may include at least one or more orifice **160(1), 160(2).** The cantilevered members **158(1), 158(2)** may be configured to be disposed within the at least one orifice **160(1), 160(2)** to restrict an angular position of the pivotable connection about the attachment member as shown in **FIG. 10D****.** The angular position of the fiber guide **44-3** may thus be restricted to prevent unwanted movement that may damage the optical fiber.

With continuing reference to **FIGS.** 9 though **10D,** the detachable optical fiber guide apparatus **40-4** may be removably attached to the splice connector installation tool **42.** The attachment member **46-4** may include at least one third extension member **140-2(1), 140-2(2)** supported by second recesses **92(1), 92(2)** in the splice connector installation tool **42.** The attachment member **46-4** may also include at least one fourth extension member **142-2** preventing the third extension members **140-2(1), 140-2(2)** from departing from the second recesses **92(1), 92(2).** The fourth extension member **142-2** may include a first attachment surface **144-2** which may communicate with the second exterior surfaces **56(1), 56(2)** of the splice connector installation tool **42.** The third extension members **140-2(1), 140-2(2)** may remain in the second recesses **92(1), 92(2)** as long as upper attachment surfaces **146-2(1), 146-2(2)** abut the second recessed surfaces **148(1), 148(2)** of the second recesses **92(1), 92(2).** The second recesses **92(1), 92(2)** may be at least partially formed by the second recessed surfaces **148(1), 148(2).** The depth of the third extension members **140-2(1), 140-2(2)** within the second recesses **92(1), 92(2)** may also be limited. In one non-limiting embodiment, the fourth extension member **142-2** may include a lower attachment surface **150-2** that may abut the first exterior surfaces **54(1), 54(2)** to prevent the upper attachment surfaces **146-2(1), 146-2(2)** from extending into the second recesses **92(1), 92(2)** beyond a specified depth. It may be undesirable to have the upper attachment surface too deep in the second recesses **92(1), 92(2)** because there may be sensitive components in the second recesses **92(1), 92(2);** for example, light-emitting diodes may be in the second recesses **92(1), 92(2)** that signify whether a satisfactory termination has been achieved between the optical fiber **86** and stub optical fiber **88.**

Two symmetrical elements for **48, 50, 54, 56, 57, 92, 140, 140-2, 142, 144, 146, 146-2, 148, 150, 158,** and **160** are shown in the embodiments depicted in **FIGS. 6A** through **10D****,** but other embodiments could also include one or more than two of each of these elements or that may be asymmetrical.

The connector installation tool, the detachable optical fiber guide apparatus, and methods described herein to insert and guide the optical fiber to the stub fiber within the fiber optic connector installed within the splice connector installation tool are applicable to any pair of interconnected optical fibers, and more particularly, between a field optical fiber and an optical fiber of any fiber optic splice connector, including a single fiber or multi-fiber fusion splice or mechanical splice connector. Examples of typical single fiber mechanical splice connectors are provided in U.S. Patent Nos. 4,755,018; 4,923,274; 5,040,867; and 5,394,496. Examples of typical multi-fiber mechanical splice connectors are provided in U.S. Patent Nos. 6,173,097; 6,379,054; 6,439,780; and 6,816,661.

As used herein, it is intended that the terms "fiber optic cables" and/or "optical fibers" include all types of single mode and multi-mode light waveguides, including one or more optical fibers that may be up-coated, colored, buffered, ribbonized and/or have other organizing or protective structure in a cable such as one or more tubes, strength members, jackets or the like. The optical fibers disclosed herein can be single mode or multi-mode optical fibers. Likewise, other types of suitable optical fibers include bend-insensitive optical fibers, or any other expedient of a medium for transmitting light signals. An example of a bend-insensitive, or bend resistant, optical fiber is ClearCurve^{®} Multimode fiber commercially available from Corning Incorporated of Corning, New York. Suitable fibers of this type are disclosed, for example, in U.S. Patent Application Publication Nos. 2008/0166094 and 2009/0169163, the disclosures of which are incorporated herein by reference in their entireties.

As used herein, the term "splice connector installation tool" does not qualify as a tool with regard to the term "tool-less."

Many modifications and other embodiments not set forth herein will come to mind to one skilled in the art to which the embodiments pertain having the benefit of the teachings presented in the foregoing descriptions and the associated drawings. Therefore, it is to be understood that the description and claims are not to be limited to the specific embodiments disclosed and that modifications and other embodiments are intended to be included within the scope of the appended claims. It is intended that the embodiments cover the modifications and variations of the embodiments provided they come within the scope of the appended claims and their equivalents. Although specific terms are employed herein, they are used in a generic and descriptive sense only and not for purposes of limitation.

## Claims

1. A detachable optical fiber guide apparatus configured to guide an optical fiber into a fiber optic connector installed within a splice connector installation tool, comprising:
a fiber guide configured to receive and guide an optical fiber; and
an attachment member supporting the fiber guide, the attachment member configured to be attached to a splice connector installation tool to align the fiber guide with a fiber entry of a fiber optic connector installed within the splice connector installation tool,
wherein the fiber guide comprising a recess defining an exit opening having a first cross-sectional area and an entry opening opposite the exit opening and having a second cross-sectional area larger than the first cross-sectional area, the exit opening configured to be disposed adjacent the fiber entry,
wherein the entry opening is configured to receive the optical fiber and to guide the optical fiber to and through the exit opening into the fiber entry.

2. The detachable optical fiber guide apparatus of claim 1, wherein the recess includes one or more recess surfaces disposed within twenty (20) degrees from an axis of the splice connector tool.

3. The detachable optical fiber guide apparatus of any of the claims 1 or 2, wherein the fiber guide is at least partially plated with a plating material.

4. The detachable optical fiber guide apparatus of any of the claims 1-3, wherein the fiber guide is at least partially plated with a plating material including a matte-finish which reflects no more than five (5) percent of a visual light beam reflected sixty (60) degrees from perpendicular to the surface.

5. The detachable optical fiber guide apparatus of claim 4, wherein the plating material includes nickel.

6. The detachable optical fiber guide apparatus of any of the claims 1-5, wherein the fiber guide is integral to the attachment member or removably attached to the attachment member.

7. The detachable optical fiber guide apparatus of any of the claims 1-5, wherein the fiber guide further comprising a pivot connection member removably attached to the attachment member.

8. The detachable optical fiber guide apparatus of any of the claims 1-5, wherein the attachment member is configured for tool-less attachment and tool-less detachment from the splice connector installation tool.

9. The detachable optical fiber guide apparatus of claim 8, wherein the attachment member comprises an extension member configured for toolless attachment to a housing feature of the splice connector installation tool.

10. The detachable optical fiber guide apparatus of claim 9, wherein the housing feature is a thread-less recess in the housing feature or a protrusion of the housing.

11. The detachable optical fiber guide apparatus of any of the claims 8-10, wherein the attachment member comprises:
at least one first extension member configured to abut a first exterior surface of the splice connector installation tool; and
at least one second extension member configured to abut a second exterior surface of the splice connector installation tool opposite the first exterior surface.

12. A method for splicing an optical fiber to a stub optical fiber in a fiber optic connector, comprising:
providing a splice connector installation tool comprising a housing;
providing a detachable optical fiber guide apparatus including a fiber guide and an attachment member;
aligning the fiber guide with a fiber entry of a fiber optic connector installed within the splice connector installation tool by attaching the attachment member to the splice connector installation tool;
attaching the fiber guide to the attachment member;
inserting an end portion of an optical fiber through the fiber guide and into the fiber optic connector;
terminating the optical fiber to a stub optical fiber in the fiber optic connector; and
removing the detachable optical fiber guide apparatus from the splice connector installation tool.

13. The method of claim 12, wherein the providing the splice connector installation tool includes:
installing a fiber optic connector including a stub optical fiber in the splice connector installation tool, the stub optical fiber aligned with an axis of the fiber optic splice connector installation tool and accessible from the fiber entry.

14. The method of claims any of claims 12 or 13, wherein the inserting the end portion of the optical fiber through the fiber guide includes:
receiving the optical fiber in a recess of the fiber guide through an entry opening, the recess defining an exit opening having a first cross-sectional area and disposed on a first end of the fiber guide and the entry opening having a second cross-sectional area larger than the first cross-sectional area and disposed on a second end of the fiber guide opposite the first end, the exit opening configured to be disposed adjacent the fiber entry;
traversing the fiber guide with the optical fiber along a bottom recess surface of the recess, the bottom recess surface is disposed within two degrees of the axis of the fiber optic splice connector installation tool; and
exiting the fiber guide with the optical fiber through an exit opening at the first end of the fiber guide, a second cross-section of the entry opening is larger than the first cross-section of the exit opening.

15. The method of claim 14, wherein the attaching the attachment member to the fiber optic splice installation tool includes:
abutting at least one first extension member of the attachment member with a first exterior surface of the splice connector installation tool and abutting at least one second extension member of the attachment member with a second exterior surface of the splice connector installation tool,
wherein the second exterior surface is opposite of the first exterior surface.
